# EUROPÄISCHE PATENTANMELDUNG

(11) **EP 4 310 354 A2**
(43) Veröffentlichungstag der Anmeldung: **24.01.2024**
(21) Anmeldenummer: 23206377.6
(22) Anmeldetag: 25.06.2021
(51) Int. Cl.: F16D 23/02

(54) **HOCHFESTE, WARUMUMFORMBARE SONDERMESSINGLEGIERUNG FÜR EIN HOCH BELASTETES BAUTEIL**

(62) Teilanmeldung aus: 21181663.2
(71) Anmelder: Otto Fuchs - Kommanditgesellschaft -, 58540 Meinerzhagen (DE)
(72) Erfinder: Reetz, Björn, 47800 Krefeld (DE); Plett, Thomas, 57392 Schmallenberg (DE); Münch, Tileman, 41751 Viersen (DE)
(74) Vertreter: Haverkamp Patentanwälte PartG mbB

(57) **Zusammenfassung**

Offenbart ist eine hochfeste, warmumformbare Sondermessinglegierung mit einem Gefüge umfassend eine β-Phase mit einem Volumenanteil von 50 - 80% und eine γ-Phase mit einem Volumenanteil von 10 - 40%, die in Atomprozent 50 - 60 Cu, 25 - 36 Zn, 5 - 13 Al umfasst, wobei die γ-Phase in eine β-Phasenmatrix eingebettet ist.

## Beschreibung

Die Erfindung betrifft eine hochfeste, warmumformbare Sondermessinglegierung, insbesondere zum Herstellen eines hochbelasteten Sondermessinglegierungsproduktes, wie beispielsweise einem Synchronring. Ferner betrifft die Erfindung ein warmumgeformtes Legierungsprodukt aus einer solchen Sondermessinglegierung.

Sondermessinglegierungen sind aus dem Stand der Technik mit einer Vielzahl unterschiedlicher Legierungszusammensetzungen bekannt. Eingesetzt werden diese für unterschiedliche Zwecke. Sondermessinglegierungen umfassen neben den Hauptelementen Cu und Zn weitere Elemente, durch die die gewünschten Legierungseigenschaften eingestellt werden können. Hierzu gehört auch das damit erzielbare Gefüge. Das Gefüge des Legierungsproduktes ist maßgeblich für bestimmte Eigenschaften des Legierungsproduktes, beispielsweise seine Verarbeitbarkeit, wie etwa ein Warmumformen, verantwortlich. Für das Warmumformen wird bevorzugt, dass die Messinglegierung eine dominierende β-Phase aufweist. Wesentliche Ursache für die gute Warmumformbarkeit der β-Phase bei höheren Temperaturen sind eine leichtere Aktivierung der Gleitsysteme innerhalb der Mikrostruktur der Legierung als Träger der plastischen Verformung und eine geringe Warmverfestigung. Dies resultiert vereinfacht in einer höheren Duktilität sowie eine geringere Härte der β-Phase während des Warmumformens. Ein gewisser Anteil an α-Phase ist tolerabel. Allerdings ist man bestrebt, bei warmumformbaren Sondermessinglegierungen die Ausbildung einer γ-Phase zu vermeiden, da diese spröde ist und somit die gewünschten Warmumformeigenschaften nachteilig beeinflusst.

Problematisch bei Mehrstofflegierungen, vor allem solchen, die mehrere Legierungselemente neben Cu und Zn enthalten, ist, dass aufgrund der komplexen Wirkung zwischen den einzelnen Legierungskomponenten eine Änderung einer einzelnen Komponente zu nicht vorhersehbaren Änderungen an dem Legierungsprodukt führen kann.

Bekannt ist eine Sondermessinglegierung mit einer guten, zum Schmieden geeigneten Warmumformbarkeit mit folgender Zusammensetzung: 60,0 - 64,0 Cu, max. 0,10 Pb, max. 0,15 Sn, max. 0,15 Fe, 0,10 - 0,25 Cr, 2,9 - 3,4 Mn, 0,25 - 0,5 Ni, 2,9 - 3,4 Al, 1,0 - 1,3 Si, Rest Zn nebst unvermeidbaren Verunreinigungen. Diese Sondermessinglegierung weist einen hohen β-Phasenanteil und einen untergeordneten α-Phasenanteil auf. Zudem zeichnet sich diese Sondermessinglegierung auch durch eine gute Zerspanbarkeit aus. Zudem weist eine solche Legierung ein gutes Reibverhalten auf. Hartphasen sind in dieser Legierung mit etwa 5 Vol.% vorhanden.

Eine weitere aus dem Stand der Technik bekannte Sondermessinglegierung mit guten Warmumformeigenschaften besteht aus: 58,0 - 61,0 Cu, max. 0,10 Pb, max. 0,5 Sn, 0,2 - 1,2 Fe, 0,8 - 1,8 Mn, 3,0 - 4,5 Ni, 2,0 - 3,5 Al, 1,0 - 2,0 Si, Rest Zn nebst unvermeidbaren Verunreinigungen. Auch diese Legierung weist neben einer guten Schmiedbarkeit eine gute Spanbarkeit auf. Ein feines Matrixgefüge aus überwiegend β-Phase und untergeordnet α-Phase begünstig eine Kombination aus guter Warmumformbarkeit und Zerspanbarkeit. Eine gewisse Kaltumformbarkeit ist bei der Legierung ebenfalls gegeben. Zusätzlich enthält die Legierung grobe Hartphasenpartikel. Bei dieser Legierung ist mitunter jedoch ein höherer Reibverschleiß zu beobachten.

Beiden vorstehend genannten Legierungen ist gemeinsam, dass sie, wenn als Synchronring als hochbelastetes Bauteil in einem Getriebe eingesetzt, in niedrigviskosen Leichtlaufölen mitunter keine hinreichende Performance aufweisen (im Gegensatz zu Mineralölen handelt es sich bei Leichtlaufölen typischerweise um synthetische Öle). Aufgrund der in solchen Getrieben herrschenden hohen Reibmomente in Verbindung mit dem Einsatz von niedrigviskosen Leichtölen weisen aus diesen Legierungen hergestellte Synchronringe nicht die gewünschte Lebensdauer auf. Diese hohen Belastungen treffen bei einem Einsatz von Synchronringen aus diesen Legierungen in herkömmlichen Getrieben unter Mineralöleinsatz nicht zu, weshalb solche Synchronringe in herkömmlichen Getrieben bislang zufriedenstellend eingesetzt werden konnten.

Eine weitere im Stand der Technik bekannte Sondermessinglegierung weist die folgende Zusammensetzung auf: 54 - 56 Cu, max. 0,10 Pb, max.0,1 Sn, 0,5 - 0,9 Fe, max. 0,02 Cr, max. 0,2 Mn, 6,0 - 7,2 Ni, 3,0 - 4,2 Al, 2,0 - 2,5 Si, Rest Zn nebst unvermeidbaren Verunreinigungen. Als Gefüge weist diese einen β- und α-Anteil auf. Auch wenn sie einen guten Verschleißwiderstand verbunden mit einer hohen Härte aufgrund eines Anteiles von bis zu 14 Vol.-% großen Hartphasen aufweist, lässt sie sich schlecht warmumformen und spanend bearbeiten. Dies wird damit begründet, dass sie einen schlechteren Materialfluss und damit eine schlechtere Formfüllung der Gravur mit sich bringt. Um dies zu kompensieren, muss das Werkzeug höher belastet werden, was auch einen höheren Werkzeugverschleiß mit sich bringt. Insgesamt sind Synchronringe aus diesem Werkstoff nur mit stark erhöhten Kosten herstellbar.

Vor dem Hintergrund stetig ansteigender Belastungen von Synchronringen werden Stahlsynchronringe, die mit einer Carbonschicht als Reibschicht überzogen sind, eingesetzt. Diese sind jedoch vergleichsweise teuer und aufwendig in der Herstellung.

Ausgehend von diesem diskutierten Stand der Technik besteht der Wunsch, eine Sondermessinglegierung bereitzustellen, die nicht nur höheren Belastungen, insbesondere in Verbindung mit niedrigviskosen, vor allem synthetischen Ölen, Stand hält, sondern vor allem auch geeignet ist, hochbelastete Bauteile, insbesondere Synchronringe, kostengünstig durch Warmumformen, ggf. gefolgt von einem spanendem Bearbeitungsschritt herzustellen.

Gelöst wird diese Aufgabe erfindungsgemäß durch eine hochfeste, warmumformbare Sondermessinglegierung mit einem Gefüge umfassend eine β-Phase mit einem Volumenanteil von 50 - 80% und eine γ-Phase mit einem Volumenanteil von 10 - 40%, die in Atomprozent 50 - 60 Cu, 25 - 36 Zn, 5 - 13 Al umfasst, wobei die γ-Phase in eine β-Phasenmatrix eingebettet ist.

Vorteilhafte Ausgestaltungen ergeben sich aus den abhängigen Ansprüchen sowie der Beschreibung.

Erstaunlicherweise hat sich gezeigt, dass der relativ hohe γ-Anteil der erfindungsgemäßen Legierung weder nachteilig für ein Warmumformen, beispielsweise ein Schmieden, noch für die spanende Bearbeitung ist. Dies wird zurückgeführt auf die besondere Phasenzusammensetzung mit einer dominanten β-Phase und einer gegenüber dieser anteilsmäßig geringeren γ-Phase in Kombination mit der konkreten Zusammensetzung der γ-Phase, die einen hohen Aluminiumgehalt umfasst. Um spröde Eigenschaften der γ-Phase zu verringern, ist bevorzugt vorgesehen, dass der Siliziumgehalt derselben auf 3,2 Atomprozent begrenzt ist. Bevorzugt ist vorgesehen, dass die γ-Phase mit einem Volumenanteil von 15 - 35%, weiter bevorzugt mit einem Volumenanteil von 18 - 30% vorgesehen ist.

Die gegenüber der β-Phase härtere γ-Phase ist nach dem Guss inselförmig in die β-Matrix eingebettet. Wird das Vorprodukt warmumgeformt, werden die γ-Inseln entsprechend der Umformung zwar gestreckt, brechen jedoch nicht, jedenfalls nicht in einem nennenswerten Maße, typischerweise < 1 % der Körner. Die maßgebliche Umformarbeit erfolgt in der die Matrix bildenden weicheren β-Phase.

Damit setzt sich die erfindungsgemäße Legierung über die im Stand der Technik herrschende Lehre, γ-Phasenanteile sind in warmumformbaren Sondermessinglegierungen unerwünscht, hinweg. Vielmehr macht man sich für hochbelastete Bauteile den Umstand zunutze, dass die γ-Phase härter ist als die β-Phase. Die γ-Phase bildet deutlich größere Körner aus als in dem Legierungsprodukt typischerweise vorhandene Hartphasen. Daher ist die Abstützung eines aus einer solchen Sondermessinglegierung hergestellten Bauteils, wie beispielsweise die Reibfläche eines Synchronringes, durch die inselartig in der β-Phase eingelagerte γ-Phase aufgrund ihrer Härte hochbelastbar. Vorteilhaft ist auch, dass aufgrund der Korngröße der Reibverschleiß an dem mit einem solchen hochbelasteten Bauteil zusammenwirkende Reibpartner deutlich geringer ist als das Vorsehen eines solchen Bauteils mit einem hohen Anteil an Siliziden. Diese weisen zwar eine höhere Härte auf, sind jedoch verglichen mit der Korngröße der γ-Körner klein, sodass letztere besser in der β-Matrix gehalten sind.

Dieser der γ-Phase zugeschriebene Aspekt kann, ohne die Warmumformbarkeit nachteilig zu beeinflussen, gesteigert werden, wenn das Legierungsprodukt intermetallische Hartphasen aufweist.

Zur Erhöhung der Festigkeit kann bevorzugt vorgesehen sein, dass die Legierung intermetallische Hartphasen aufweist. Diese sind typischerweise in einem Volumenanteil von 5 - 15 % vorhanden. Die Hartphasen tragen zu einer erhöhten Verschleißfestigkeit bei und unterstützen aufgrund ihrer versprödenden Wirkung an den Phasengrenzen den Spanbearbeitungsprozess. Das Verhältnis zwischen γ-Phase und Hartphase kann in etwa 2:1 bis 3:1 betragen.

Zudem ist die erfindungsgemäße Legierung insgesamt härter als eine reine β-Legierung mit eingelagerten Hartphasen: Hartphasen können nur bis etwa 15 % Volumenanteil in einer Legierung mittels üblicher Herstellschritte und damit kostengünstig eingebaut werden. Durch das zusätzliche Vorsehen der γ-Phase ist demgegenüber eine weitere Möglichkeit zum Erhöhen der Härte und damit auch der Festigkeit eröffnet, da in wesentlich größeren Anteilen die γ-Phase problemlos in der Legierung eingestellt werden kann.

Bevorzugt umfasst das Gefüge Aluminide, insbesondere Nickelaluminide, als primäre Hartphasen. Diese können insbesondere mehr als 80 oder 90 Vol.-% der Hartphasen ausmachen. Diese in Form von Ni₅Al vorkommenden Verbindungen binden den größten vorhandenen Teil des Nickels relativ stark. Zusätzlich kann Nickel gelöst in einer Cu-Zn-Phase in der Legierung zur Verbesserung des Formänderungsvermögens ohnehin eingesetzt werden; Aluminium wird ebenso für die Bereitstellung der gewünschten γ-Phase benötigt.

Weiter bevorzugt umfasst die Legierung intermetallische Phasen auf Silizidbasis. Dies können Chromsilizide, Mangansilizide oder Mangan-Nickel-Silizide sein, wobei Mangansilizide und Mangan-Nickel-Silizide bevorzugt vorgesehen sind. Diese Silizide sind punktförmig fein verteilt in der β- und γ-Phase als auch innerhalb der Aluminide. Diese Hartphasen verbessern die Spanbarkeit. Zudem wird durch diese Hartphasen das in der Legierung vorhandene Silizium abgebunden, sodass es nur in geringen Teilen (unter 3,5 Atomprozent) in der γ-Phase gelöst wird. Hierdurch wird verhindert, dass die γ-Phase zu spröde ist. So kann vorgesehen sein, dass die γ-Phase 1,8 - 3,2 Atomprozent Si umfasst.

Nickel fördert das Formänderungsvermögen, sodass die γ-Phase warmgeformt, insbesondere geschmiedet werden kann. Bevorzugt ist vorgesehen, dass die γ-Phase 1,8 - 3,2 Atomprozent Ni umfasst.

Geht die Gehaltsmenge von Ni und/oder Si über die genannten Werte hinaus, ist die γ-Phase als stark versprödend erkannt worden.

Ferner können bevorzugt Aluminide überwiegend in der β-Phase und an den Korngrenzen zweier β-Körner vorgesehen sein. Aluminide können auch auf den Phasengrenzen zur γ-Phase vorliegen. Unerwünscht sind Aluminide jedoch innerhalb der γ-Phase, da andernfalls die γ-Phase mit denjenigen Elementen, die sonst als Hartphasen, insbesondere Aluminide, ausgeschieden werden, abgereichert werden würde. Dies ist unerwünscht, da insbesondere im Aluminium die vorteilhaften Eigenschaften der γ-Phase gesehen werden. Daher ist bevorzugt vorgesehen, das Verhältnis zwischen "in β-Phase zu darin eingelagerten Aluminden" und "in γ-Phase zu darin eingelagerten Aluminiden" auf > 3:1, weiter bevorzugt auf > 5:1 zu begrenzen. Für die Anwendung der Legierung sind die vorstehend genannten Verteilungen der Gefügebestandteile für eine möglichst homogene Verteilung der Härte der Legierung in vorgesehenen Funktionsflächen sinnvoll: Da die γ-Phase eine höhere Härte aufweist als die β-Phase, wird die Verschleißbeständigkeit der β-Phase durch darin eingelagerte oder randlich daran angelagerte Aluminide bzw. weitere intermetallische Hartphasen verbessert, sodass insgesamt das Legierungsprodukt eine höhere Härte im Mittel aufweist. Auf diese Weise ist ein hochbelastetes Bauteil an seiner beanspruchten Oberfläche insgesamt härter ausgebildet, da der Anteil der γ-Phase in einem höheren Volumenanteil liegt, als dies mit Hartphasen allein möglich wäre. Zudem ist ein Herausbrechen der großen Aluminide als auch der weiteren intermetallischen Hartphase in der β-Phase weniger wahrscheinlich als aus der γ-Phase, da die β-Phase weicher ist und daher weniger zu einem Sprödbruch neigt.

Die Härte der Legierung kann insgesamt erhöht werden, indem ein Gefüge bereitgestellt wird, in dem in der γ-Phase zumindest eine β-Ausscheidungsphasen und/oder in der β-Phase zumindest eine γ-Ausscheidungsphase vorgesehen ist. Die in der γ-Phase vorgesehenen β-Ausscheidungsphasen sind typischerweise feinnadelig verteilt; die in der β-Phase vorgesehene γ-Ausscheidungsphase dispers globular. Dieses Gefüge kann durch Glühen des warmumgeformten hochbelasteten Bauteils für zwei bis acht Stunden, bevorzugt vier bis sechs Stunden bei 280°C bis 380 °C, bevorzugt bei 300°C bis 350°C sowie anschließender Abkühlung an Umgebungsluft erzielt werden.

Die β-Phase weist bevorzugt 53 - 62 Atomprozent Cu, 28 - 38 Atomprozent Zn und 4 - 10 Atomprozent Al auf. Mit einer solchen β-Phase ist bereits eine hohe Festigkeit gegeben.

Die β-Phase kann weiter verbessert werden, wenn diese 55 - 60 Atomprozent Cu, 30 - 36 Atomprozent Zn und 6 - 8 Atomprozent Al umfasst. Hierdurch erfolgt eine bessere Unterstützung der γ-Phase während des Umform prozesses.

Die γ-Phase weist bevorzugt 52 - 56 Atomprozent Cu, 28 - 33 Atomprozent Zn und 5 - 9 Atomprozent Al auf. Hierdurch wird eine höhere Prozesssicherheit betreffend des Warmumformprozesses sichergestellt.

Der Volumenanteil der γ-Phase ist bevorzugt 15 - 30 Vol.-%, weiter bevorzugt 17 - 28 Vol.-%. Durch ein ausgewogenes Verhältnis zwischen β-Phase und γ-Phase kann die Umformbarkeit für den jeweils gewünschten Zweck eingestellt werden, ohne eine zu weiche Legierung zu erhalten.

Zum Bereitstellen der gewünschten Zerspanbarkeit ist P im Bereich 0,01 - 1 Gew.-%, bevorzugt 0,01 - 0,06 Gew.-% als Mikrolegierungselement in die Legierung eingebracht. In der Matrix fein verteilte Phosphide begünstigen die Zerspanbarkeit. Zudem kann Phosphor teilweise an der Silizidbildung beteiligt sein.

Typischerweise besteht die Legierung aus einer β- und einer γ-Phase mit eingelagerten intermetallischen Hartphasen. Eine α-Phase ist - wenn überhaupt - nur in Mindermengen zu finden; bevorzugt ist die Legierung - α-phasenfrei. Dies ist gewünscht, da die α-Phase eine geringere Härte aufweist.

Eine Legierungszusammensetzung, die zu dem vorstehend beschriebenen Gefüge führen kann, umfasst folgende Zusammensetzung (Angaben in Gew.-%):
Cu: 50 - 58
Mn: 1,5-3,1
Ni: 3,2 - 5,85
AI: 2,8 - 5,6
Si: 0,5 - 2,5
Sn: 0,05 - 0,5
Cr: 0,05 - 1
P: 0,01 - 0,1
Fe: max. 0,3
Pb: max. 0,1
Zn: Rest nebst, unvermeidbaren Verunreinigungen.

Die im Rahmen dieser Ausführungen angesprochenen unvermeidbaren Verunreinigungen umfassen je Element 0,05 Gew.-% und überschreiten in der Summe einen Anteil von 0,15 Gew.-% nicht.

Eine solche Legierung weist eine hohe Festigkeit auf, ist äußerst verschleißbeständig und trotzdem sehr gut warmumformbar und spanend zu bearbeiten. Durch die gewählten Legierungselemente sowie insbesondere der jeweiligen Anteile kann ein heterogenes Gefüge eingestellt werden, welches eine Vielzahl unterschiedlicher Silizide aufweist. Ein solches Gefüge neigt weniger zu einem Festfressen, wenn das hochbelastete Bauteil in einer entsprechenden Umgebung eingesetzt wird. Zudem kann der erforderliche Anteil an γ-Phase eingestellt werden.

Ein Legierungsprodukt aus dieser Legierung weist die erforderlichen mechanischen Festigkeitswerte auf, denen ein hochbelastetes Bauteil auch in hochbelasteten Getrieben bei Einsatz niedrigviskoser Öle, vor allem Additiv versetzter Öle ausgesetzt ist.

Bevorzugt ist vorgesehen, dass die Legierung die folgende Zusammensetzung aufweist (Angaben in Gew.-%):
Cu: 52 - 56
Mn: 1,8-2,7
Ni: 3,7 - 5,3
AI: 3,2 - 5,1
Si: 1,0 - 2,0
Sn: 0,05 - 0,5
Cr: 0,05 - 0,8
P: 0,02 - 0,06
Fe: max. 0,3
Pb: max. 0,1
Zn: Rest, nebst unvermeidbaren Verunreinigungen.

Mit einer solchen Legierungszusammensetzung ist die Heterogenität des Gefüges weiter verbessert und es stellt sich eine verbesserte Warmumformbarkeit ein.

Weiter bevorzugt ist vorgesehen, dass die Legierung die folgende Zusammensetzung aufweist (Angaben in Gew.-%):
Cu: 53 - 55
Mn: 1,9-2,5
Ni: 4,4 - 5,0
AI: 3,9 - 4,7
Si: 1,4 - 2,0
Sn: 0,2 - 0,55
Cr: 0,03 - 0,28
P: 0,02 - 0,07
Fe: max. 0,15
Pb: max. 0,1
Zn: Rest nebst unvermeidbaren Verunreinigungen

Mit einer solchen Legierung wird die γ-Phase entsprechend den gewünschten Eigenschaften - Festigkeit und Umformvermögen - gezielt eingestellt.

Zum Herstellen der Legierung kann diese gegossen und anschließend luftabgekühlt (ca. 0,1 - 1 K/s) werden. Wird die Legierung warmumgeformt (beispielsweise durch Schmieden), kann eine Abkühlung an bewegter Luft (ca. 1 - 30 K/s) vorgesehen sein, um nachfolgende Bearbeitungsschritte schneller durchführen zu können.

Ein Synchronring ist ein hochbelastetes Bauteil in einem Getriebe. Ein solcher Synchronring wird bevorzugt aus einer der vorgenannten Legierungen mit dem zuvor beschriebenen Gefüge wie folgt hergestellt:
1. Gießen einer Legierung mit einer zuvor beschriebenen Zusammensetzung.
2. Strangpressen und bevorzugt Richten des gegebenenfalls zu kleineren Stücken zerteilten Gussblockes zu Rohren bei einer Temperatur von 600 - 800°C, bevorzugt bei 650 - 740 °C,
3. Abkühlen, bevorzugt mit einer Abkühlungsrate von 0,1 bis 1 K/s, bevorzugt luftabgekühlt,
4. Endkonturnahes Schmieden des Schmiederohlings zu einem Synchronringrohling bei einer Temperatur von 500 - 650 °C, bevorzugt bei 530 - 610 °C,
5. Abkühlen, bevorzugt mit einer Abkühlrate von 1 bis 30 K/s, insbesondere mit einer Abkühlrate von 1 bis 10 K/s und
6. Spanende Bearbeitung des Synchronrings in seine Endkontur.

Es versteht sich, dass zwischen dem Bereitstellen von Rohren und dem endkonturnahen Schmieden Stutzen bereitgestellt werden.

Für eine Verbesserung der Performance der hergestellten Synchronringe, insbesondere zur Erhöhung der Härte derselben, kann vor der spanenden Bearbeitung ein obenstehend bereits beschriebener Glühschritt vorgesehen sein. Durch die spanende Bearbeitung im Anschluss des Glühschrittes kann das Glühen auch ohne Schutzgasatmosphäre durchgeführt werden: Die Hauptfunktionsfläche des Synchronrings - der Reibkonus - wird spanend bearbeitet, sodass die die tribologische Funktion negativ beeinflussende Oxidschicht anschließend abgetragen wird. Auf diese Weise kann der Glühschritt wirtschaftlich und ressourcensparend durchgeführt werden.

Die Erfindung wird nachstehend anhand eines Ausführungsbeispiels und der beiliegenden Figuren näher erläutert. Es zeigen:
- **Fig. 1:**: Längs- und Querschliffe eines Rohrmaterials aus der erfindungsgemäßen Legierung,
- **Fig. 2:**: eine elektronenmikroskopische Aufnahme des Rohrmaterials aus Figur 1,
- **Fig. 3:**: ein Schliff eines Synchronringquerschnittes im Bereich eines Außenzahns aus der erfindungsgemäßen Legierung (Figur 3a) sowie in einer Ausschnittsvergrößerung (Figur 3b),
- **Fig. 4:**: ein Schliff eines Querschnittes eines bei 300 °C / 5h geglühten Synchronringes aus der erfindungsgemäßen Legierung in verschiedenen Vergrößerungen ungeätzt und geätzt und
- **Fig.** 5:: ein Schliff eines Querschnittes eines bei 350 °C / 5h geglühten Synchronringes aus der erfindungsgemäßen Legierung in verschiedenen Vergrößerungen ungeätzt und geätzt.

Eine Legierung mit folgender Zusammensetzung (Angaben in Gew.-%):
Cu: 54
Mn: 2,2
Ni: 4,6
AI: 4,3
Si: 1,5
Sn: 0,28
Cr: 0,15
P: 0,05
Fe: max. 0,12
Pb: max. 0,1
Zn: Rest, nebst unvermeidbaren Verunreinigungen
wurde aufgeschmolzen und in einem vertikalen Stranggussverfahren zu Stangen gegossen. Aus diesen Stangen wurden Bolzen für das sich anschließende Strangpressen abgesägt. Das stranggepresste Vormaterial wurde zu Synchronringen geschmiedet.

Hergestellt und untersucht wurden:
- Stranggepresste und gerichtete Rohre als Vormaterial für Synchronringe, stranggepresst bei einer Temperatur von 690° C, und
- aus Stutzen von diesen Rohren (Schmiederohlinge) bei einer Temperatur von 570° C warmgeschmiedete Synchronringe.

Das Rohrmaterial wurde auf seine mechanischen Eigenschaften untersucht: Der E-Modul beträgt zwischen 108 und 121 kN/mm², R_{p0.2} zwischen 620 und 638 N/mm² sowie Rₘ zwischen 670 und 690 N/mm².

Bezüglich der Härte der einzelnen Phasen β, γ und intermetallische Hartphasen) wurden drei Proben genommen:

| | **Härte Vickers [HV 0,01]** | | |
|---|---|---|---|
| **Probe** | **β-Phase** | **γ-Phase** | **intermetallische Hartphase** |
| 1 | 264 | 578 | 626 |
| 2 | 249 | 583 | 609 |
| 3 | 278 | 578 | 1213 |
| **Mittel** | **263,7** | **579,7** | **816,0** |

Sowohl die β- als auch die γ-Phase weisen eine homogene Härteverteilung auf. Die intermetallischen Hartphasen weisen unterschiedliche Zusammensetzungen auf und variieren entsprechend ihrer Zusammensetzung in ihrer Härte. Dies betrifft insbesondere die Aluminide und Silizide. Bei den Proben 1 und 2 handelt es sich bei den intermetallischen Hartphasen um Aluminide, bei der Probe 3 um ein Silizid. Insgesamt ist im Vergleich zu erkennen, dass die weichste Phase die β-Phase ist, die nächsthärtere die v-Phase und die härteste die intermetallische Phase.

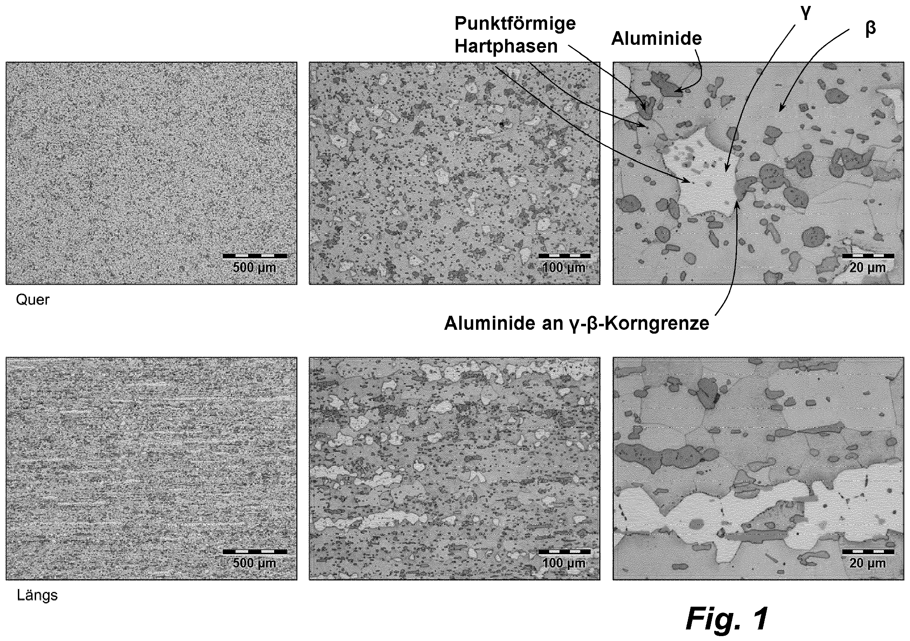

Die Anordnung der einzelnen Phasen ist in einer geätzten Schliffansicht eines Rohrmaterials als Vormaterial für einen Synchronring in Figur 1 in einem Längsschnitt (unten) als auch einem Querschliff (oben) in verschiedenen Vergrößerungen abgebildet. Anhand eines mittleren Grautons ist die β-Phase erkennbar, in einem demgegenüber hellen Grau die γ-Phase und in einem dunklen Grau Aluminide als Hartphasen. Fein verteilte, punktförmige weitere intermetallische Verbindungen, bei denen es sich nicht um Aluminide handelt, sind schwarz dargestellt. Es wird deutlich, dass die weiche β-Phase die härtere γ-Phase umfänglich einbettet. Die γ-Phase ist inselförmig in der β-Phase eingelagert.

Der Anteil der einzelnen Phasen lässt sich, gemessen im Längsschnitt, ermitteln: β-Phase: 55 - 76, γ-Phase: 16 - 34, intermetallische Hartphasen: 8 - 12, jeweils in Vol.-%. Im Mittel wurden 66 Vol.-% β-Phase, 24 Vol.-% γ-Phase und 11 Vol.-% intermetallische Phase ermittelt.

Es können große Aluminide erkannt werden, welche typischerweise Nickelaluminide sind. Auch an den Korngrenzen zwischen γ-Phase und β-Phase können Aluminide erkannt werden.

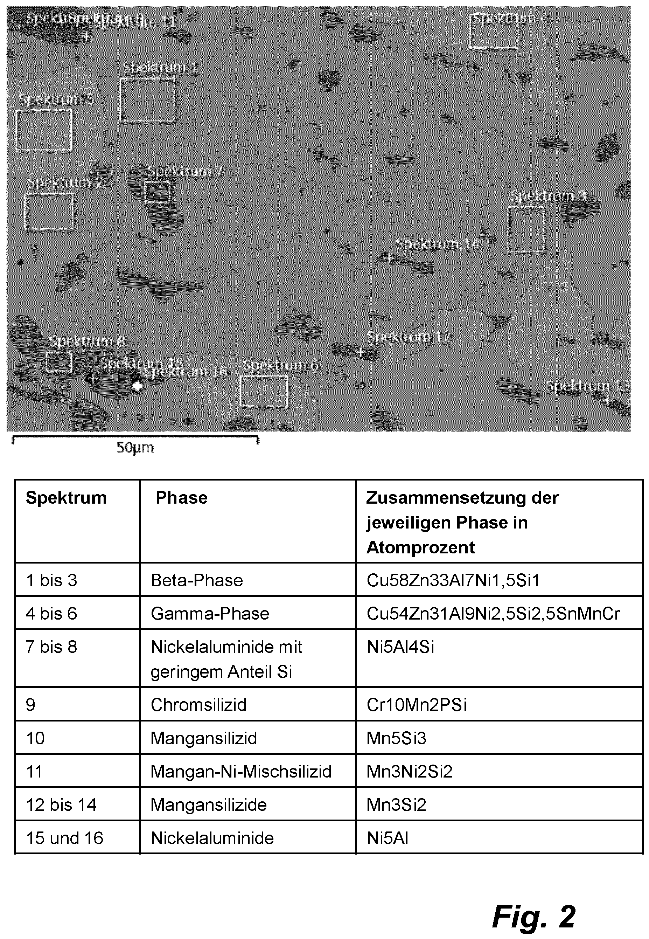

Figur 2 ist eine elektronenmikroskopische Aufnahme eines Gefügeausschnitts. Mittels Spektralanalyse werden die an den einzelnen Ausscheidungen beteiligten Elemente ermittelt. Für jedes in Figur 2 eingezeichnete Spektrum sind nachstehend die Elementangaben angegeben:

| **Spektrum** | **Phase** | **Zusammensetzung der jeweiligen Phase in Atomprozent** |
|---|---|---|
| 1 bis 3 | β-Phase | Cu58Zn33Al7Ni1,5Si1 |
| 4 bis 6 | γ-Phase | Cu54Zn31Al9Ni2,5Si2,5SnMnCr |
| 7 bis 8 | Nickelaluminide mit geringem Anteil Si | Ni5Al4Si |
| 9 | Chromsilizid | Cr10Mn2PSi |
| 10 | Mangansilizid | Mn5Si3 |
| 11 | Mangan-Ni-Mischsilizid | Mn3Ni2Si2 |
| 12 bis 14 | Mangansilizide | Mn3Si2 |
| 15 und 16 | Nickelaluminide | Ni5Al |

Die feinverteilten Hartphasen sind in ihrer Zusammensetzung unterschiedlich. Dieses ist für das Reibverhalten vorteilhaft: Durch die Heterogenität ist die Neigung zum Fressen zweier unter Reibung belasteter Partner herabgesetzt.

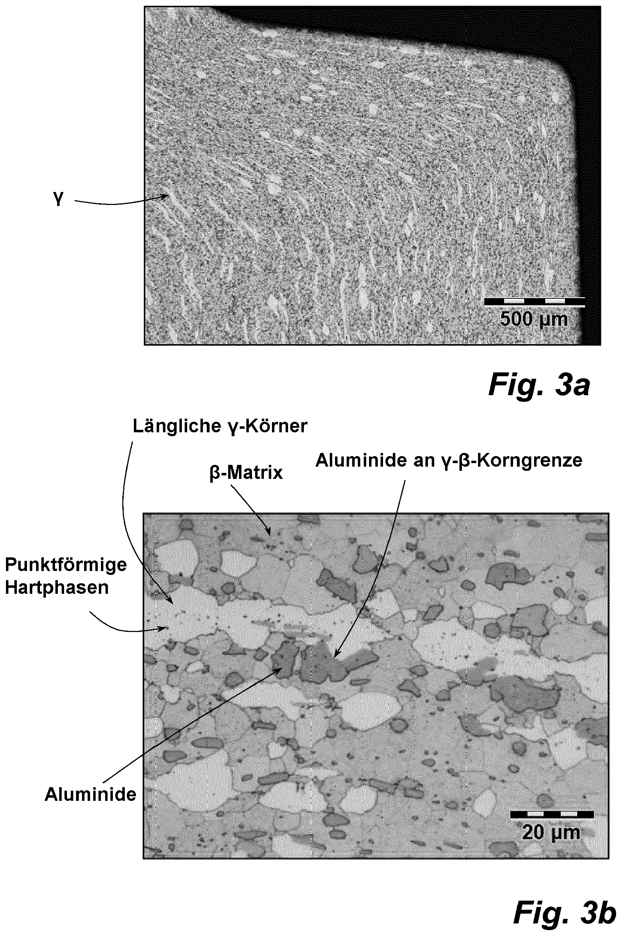

Figur 3 zeigt einen Teil eines Außenzahns eines aus dem vorstehend beschriebenen Rohrmaterial gefertigten Synchronringes. Deutlich sind die durch das Warmumformen gestreckten γ-Ausscheidungen zu erkennen, eingebettet in β-Phase. Beachtlich ist, dass diese durch den Warmumformprozess entsprechend der Zahnform gebogen und damit dem Umformverlauf folgend ausgebildet sind. Gleichzeitig sind sie nur endkonturnah verformt; die endkonturgenaue Form wird vornehmlich durch das Umformen der weicheren und weniger spröden β-Matrix sichergestellt. Die γ-Ausscheidungen sind daher mehrheitlich durch den Umformprozess nicht gebrochen. Sind Brüche zu verzeichnen, stützt die β-Matrix diese auffüllend ab, wie in Figur 3 in einer Vergrößerung zu erkennen.

Die so hergestellten Synchronringe wurden Belastungsuntersuchungen unterzogen und die Ergebnisse mit einer gut umformbaren Referenzlegierung, wie sie bei derzeitig produzierten Synchronringen eingesetzt wird, sowie gegenüber einer hochfesten Vergleichslegierung, die nur schwer umformbar ist, gegenübergestellt.

Die Referenzlegierung weist folgende Zusammensetzung auf: 61,8 Cu, 0,1 Sn, 0,08 Fe, 0,17 Cr, 3,15 Mn, 0,34 Ni, 3,1 Al, 1,15 Si, Rest Zn.

Die hochfeste Vergleichslegierung weist folgende Zusammensetzung auf: 55,1 Cu, 0,07 Sn, 0,7 Fe, 0,01 Cr, 0,13 Mn, 6,7 Ni, 3,73 Al, 2,2 Si, Rest Zn.

Die Ergebnisse dieser Untersuchungen sind nachstehend wiedergegeben:

### Dauerschaltversuch

Beim Dauerschaltversuch wird ein Synchronring unter hohen Belastungen, wie sie normalerweise nur für karbonbeschichtete Stahlsynchronringe angenommen werden, geschaltet. Das Prüfen fand unter Nutzung eines additivierten, synthetischen Leichtlauföls statt.

Während ein Synchronring aus der Referenzlegierung nur 75.000 Schaltungen erlaubte, konnte mit einem Synchronring aus der erfindungsgemäßen Legierung eine Schaltzahl von 100.000 Schaltungen erreicht werden. Nach 100.000 Schaltungen wird das Prüfverfahren aufgrund kundenüblicher Prüfbedingungen abgebrochen. 100.000 Schaltungen resultieren aus der Hochrechnung der üblichen durchschnittlichen Nutzungsdauer eines Fahrzeugs.

### Verschleißwiderstand

Beim Verschleißwiderstand wird auf einer warmumgeformten Scheibe der zu prüfenden Legierung ein Stift aus einem wesentlich härteren Stahl (hier: 100Cr6) unter konstant gehaltenen Belastungen gedrückt und die Scheibe dabei gedreht (30 N/mm² Pressung, 1 m/s Gleitgeschwindigkeit, 80° C Öltemperatur). Geprüft wird, wieviel Kilometer der Stift auf der Scheibe gefahren werden kann, bis dass genau ein Gramm der zu prüfenden Legierung abgerieben ist. Dieser Versuch wurde zunächst in einem additivierten, synthetischen Leichtlauföl durchgeführt. Während bei der vorgenannten Referenzlegierung als Ergebnis 33,9 km/g ermittelt werden konnte, ist dieses bei der erfindungsgemäßen Legierung mit 53,2 km/g weitaus besser. Als weiterer Vergleich wurde diese Prüfung mit der vorstehend genannten, hochfesten Vergleichslegierung durchgeführt. Als Ergebnis konnte für diese 59,9 km/g ermittelt werden. Die erfindungsgemäße Legierung hat somit einen Verschleißwiderstand ähnlich zu dem der hochfesten Vergleichslegierung, was eine außerordentliche Performance verspricht.

Der gleiche Versuch wurde im Vergleich zwischen Referenzlegierung und erfindungsgemäßer Legierung in einem Mineralöl durchgeführt. Hier sind erfahrungsgemäß höhere Werte zu erwarten: Bei der Referenzlegierung konnten 64,3 km/g erreicht werden, bei der erfindungsgemäßen Legierung hingegen 70,5 km/g.

### Umformwiderstand

Der Umformwiderstand beim Warmumformen der vorstehend genannten Referenzlegierung und der hochfesten Legierung sowie der erfindungsgemäßen Legierung wurde beim Schmieden untersucht und verglichen. Als Referenz wurde die Referenzlegierung mit einem Umformwiderstand von 100 % angenommen. Die hochfeste Vergleichslegierung hat demgegenüber einen Umformwiderstand von 170 %. Die erfindungsgemäße Legierung weist hingegen nur einen Umformwiderstand von 110 - 125 % auf.

### Glühen

Der vorstehend beschriebene Synchronring wurde für fünf Stunden bei 300 °C bzw. 350 °C geglüht und anschließend an der Umgebungsluft abgekühlt.

Die Ergebnisse von Härtemessungen im Vergleich zu einer nicht-geglühten Legierung sind nachstehend eingeblendet:

| **Glühtemperatur** | **Härte Brinell [HBW 2,5/62,5]** |
|---|---|
| kein Glühen | 260 |
| 300 °C / 5h | 291 |
| 350 °C / 5h | 280 |

Nachstehend eingeblendet sind die Phasenanteile im Vergleich:

| **Glühen** | **β-Phase [Vol.-%]** | **γ-Phase [Vol.-%]** | **Intermetallische Hartphase [Vol.-%]** |
|---|---|---|---|
| kein Glühen | 66 | 24 | 11 |
| 300 °C / 5h | 65,8 | 26 | 8,2 |
| 350 °C / 5h | 69,4 | 20 | 10,6 |

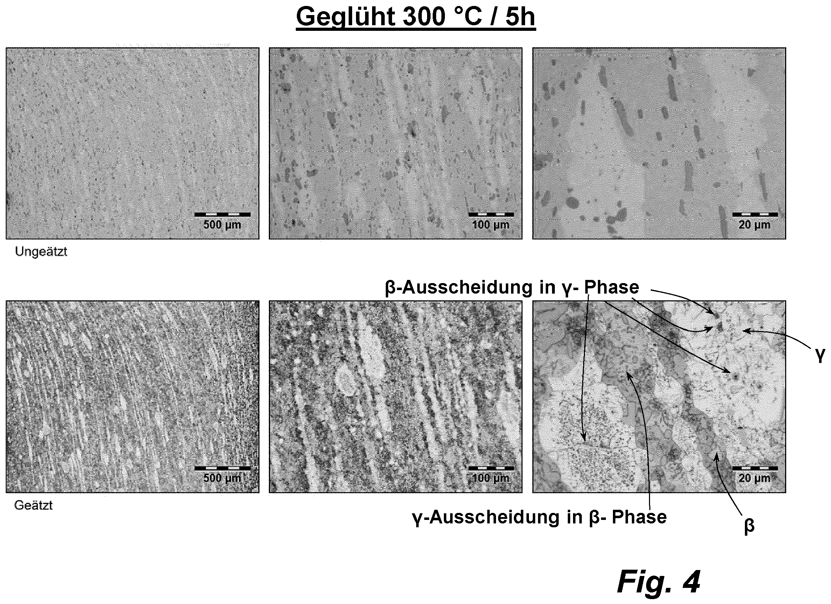

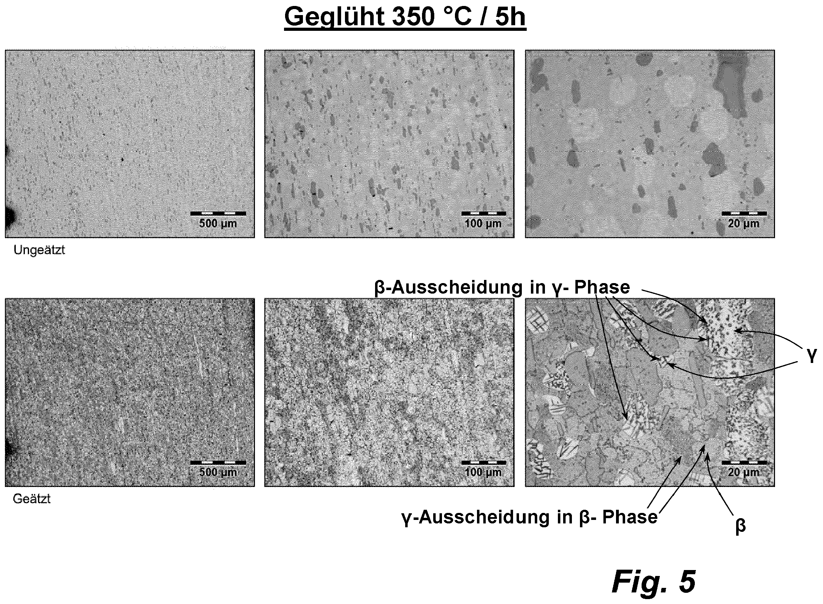

Die Phasenanteile ändern sich relativ zueinander durch den Glühschritt nicht wesentlich. Dennoch wird durch das Glühen die Härte erhöht. Dies wird durch ein geändertes Gefüge (s. Figuren 4 und 5) begründet: In dem Gefüge sind in der γ-Phase feinnadelige β-Ausscheidungsphasen und in der β-Phase globulare γ-Ausscheidungsphasen ausgebildet. Das Verhältnis zwischen in der γ-Phase vorhandene β-Ausscheidungsphasen und in der β-Phase vorhandene γ-Ausscheidungsphase lässt sich mit etwa 3:1 bis 7:1 angeben. Diese Ausscheidungen führen zu einer Heterogenisierung des Gefüges, durch die insgesamt die Härte gezielt eingestellt werden kann.

Die jeweiligen Ausscheidungen innerhalb der einzelnen Phasen sind in der bei 350 °C geglühten Legierung (Figur 5) größer; insbesondere ist der Anteil der β-Ausscheidungen in der γ-Phase größer als derjenige der bei 300 °C geglühten Legierung (Figur 4). Dies erklärt auch die höhere Härte der Legierung bei der niedrigeren Glühtemperatur, die durch den größeren, in sich geschlossenen γ-Anteil erzielt wird.

Insgesamt ist erkennbar, dass die erfindungsgemäße Legierung für ein hochbelastetes Bauteil signifikant verbesserte Charakteristika aufweist. Gleichzeitig ist eine Herstellung eines hochbelasteten Bauteils durch Warmumformen problemlos möglich. Mithin lassen sich aus einer Sondermessinglegierung auf kostengünstige Weise Bauteile herstellen, die auch bei hohen Belastungen erfolgreich eingesetzt werden können. Bei Bedarf kann durch einen anschließenden Glühschritt auf einfache Weise die Härte der hochbelasteten Bauteile weiter optimiert werden.

Die Erfindung ist anhand von Ausführungsbeispielen beschrieben worden. Ohne den Schutzbereich, beschrieben durch die Ansprüche, zu verlassen, ergeben sich für den Fachmann zahlreiche weitere Ausgestaltungen, den Erfindungsgedanken umzusetzen, ohne dass diese im Rahmen dieser Ausführungen näher erläutert werden müssten.

## Patentansprüche

1. Hochfeste, warmumformbare Sondermessinglegierung mit einem Gefüge umfassend eine β-Phase mit einem Volumenanteil von 50 - 80% und eine γ-Phase mit einem Volumenanteil von 10 - 40%, die in Atomprozent 50 - 60 Cu, 25 - 36 Zn, 5 - 13 Al umfasst, wobei die γ-Phase in eine β-Phasenmatrix eingebettet ist.

2. Sondermessinglegierung nach Anspruch 1, **dadurch gekennzeichnet, dass** sie ferner intermetallische Hartphasen in einem Volumenanteil von 5 - 15 % umfasst.

3. Sondermessinglegierung nach Anspruch 1 oder 2, **dadurch gekennzeichnet, dass** das Verhältnis zwischen intermetallischen Phasen und γ-Phase 2:1 bis 3:1 beträgt.

4. Sondermessinglegierung nach einem der Ansprüche 1 bis 3, **dadurch gekennzeichnet, dass** die intermetallischen Hartphasen Nickelaluminide umfassen.

5. Sondermessinglegierung nach einem der Ansprüche 1 bis 4, **dadurch gekennzeichnet, dass** die intermetallischen Phasen ein oder mehrere Silizide aus der Gruppe Chromsilizide, Mangansilizide und Mangan-Nickel-Silizide umfassen, bevorzugt Mangansilizide und Mangan-Nickel-Silizide umfassen.

6. Sondermessinglegierung nach einem der Ansprüche 1 bis 5, **dadurch gekennzeichnet, dass** die γ-Phase in Atomprozent 1,8 - 3,2 Si umfasst.

7. Sondermessinglegierung nach einem der Ansprüche 1 bis 6, **dadurch gekennzeichnet, dass** die γ-Phase in Atomprozent 1,8 - 3,2 Ni umfasst.

8. Sondermessinglegierung nach einem der Ansprüche 1 bis 7, **dadurch gekennzeichnet, dass** die β-Phase in Atomprozent 53 - 62 Cu, 28 - 38 Zn und 4 - 10 Al umfasst.

9. Hochfeste, schmiedbare Sondermessinglegierung mit einem Gefüge nach einem der Ansprüche 1 bis 8 und folgender Zusammensetzung (Angaben in Gew.-%):
Cu: 50 - 58
Mn: 1,5-3,1
Ni: 3,2 - 5,85
AI: 2,8 - 5,6
Si: 0,5 - 2,5
Sn: 0,05 - 0,5
Cr: 0,05 - 1
P: 0,01 - 0,1
Fe: max. 0,3
Pb: max. 0,1
Zn: Rest, nebst unvermeidbaren Verunreinigungen

10. Sondermessinglegierung nach Anspruch 9 umfassend (Angaben in Gew.-%):
Cu: 52 - 56
Mn: 1,8-2,7
Ni: 3,7 - 5,3
AI: 3,2 - 5,1
Si: 1,0 - 2,0
Sn: 0,05 - 0,5
Cr: 0,05 - 0,8
P: 0,02 - 0,08
Fe: max. 0,3
Pb: max. 0,1
Zn: Rest, nebst unvermeidbaren Verunreinigungen

11. Sondermessinglegierung nach Anspruch 10 umfassend (Angaben in Gew.-%):
Cu: 53 - 55
Mn: 1,9-2,5
Ni: 4,4 - 5,0
AI: 3,9 - 4,7
Si: 1,4 - 2,0
Sn: 0,2 - 0,55
Cr: 0,03 - 0,28
P: 0,02 - 0,07
Fe: max. 0,15
Pb: max. 0,1
Zn: Rest, nebst unvermeidbaren Verunreinigungen

12. Warmumgeformtes Sondermessinglegierungsprodukt, hergestellt aus einer Legierung nach einem der Ansprüche 9 bis 11 mit einem Gefüge gemäß einem der Ansprüche 1 bis 8.

13. Sondermessinglegierungsprodukt nach Anspruch 12, **dadurch gekennzeichnet, dass** das Sondermessinglegierungsprodukt ein Synchronring für hochbelastete Anwendungen ist.
